(19) Europäisches Patentamt
European Patent Office
Office européen des brevets

(11) **EP 3 548 774 B1**

(12) **EUROPÄISCHE PATENTSCHRIFT**

(45) Veröffentlichungstag und Bekanntmachung des Hinweises auf die Patenterteilung:
**26.10.2022   Patentblatt 2022/43**

(21) Anmeldenummer: **17828653.0**

(22) Anmeldetag: **23.11.2017**

(51) Internationale Patentklassifikation (IPC):
**F16H 57/031** *(2012.01)*      **F16H 57/04** *(2010.01)*
**F16H 57/02** *(2012.01)*

(52) Gemeinsame Patentklassifikation (CPC):
**F16H 57/0416; F16H 57/031;** F16H 2057/02008

(86) Internationale Anmeldenummer:
**PCT/EP2017/025343**

(87) Internationale Veröffentlichungsnummer:
**WO 2018/099605 (07.06.2018 Gazette 2018/23)**

(54) **GETRIEBE MIT EINEM GEHÄUSE, WELCHES EIN UNTERES GEHÄUSETEIL AUFWEIST, AUF WELCHES EIN OBERES GEHÄUSETEIL AUFGESETZT IST**

GEARBOX WITH A HOUSING WHICH HAS A LOWER HOUSING PART, ONTO WHICH AN UPPER HOUSING PART IS PLACED

ENGRENAGE COMPRENANT UN CARTER QUI POSSÈDE UNE PARTIE DE CARTER INFÉRIEURE SUR LAQUELLE EST POSÉE UNE PARTIE DE CARTER SUPÉRIEURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2016   DE 102016014336**

(43) Veröffentlichungstag der Anmeldung:
**09.10.2019   Patentblatt 2019/41**

(73) Patentinhaber: **SEW-EURODRIVE GmbH & Co. KG 76646 Bruchsal (DE)**

(72) Erfinder: **BLICKLE, Christopher Greenville South Carolina 29605 (US)**

(56) Entgegenhaltungen:
**GB-A- 493 698      JP-A- 2011 069 457 US-A- 5 191 813**

EP 3 548 774 B1

**Beschreibung**

Die Erfindung betrifft ein Getriebe mit einem Gehäuse, welches ein unteres Gehäuseteil aufweist, auf welches ein oberes Gehäuseteil aufgesetzt ist.

Es ist allgemein bekannt, dass ein Getriebe ein Gehäuse aufweist, welches Lager aufnimmt zur drehbaren Lagerung von Wellen.

Aus der JP 2011 069 457 A ist als nächstliegender Stand der Technik ist eine Achsenanordnung bekannt.

Aus der GB 493 698 A ist eine Luftkühlung für ein Getriebegehäuse bekannt.

Aus der US 5 191 813 A ist eine hydrostatische Übertragung mit Lüfter bekannt.

Der Erfindung liegt daher die Aufgabe zugrunde, ein Getriebe weiterzubilden, wobei die Aufgabe mit den Merkmalen des Getriebes nach Anspruch 1 gelöst wird.

Vorteilhafte Ausgestaltungen der Erfindung ergeben sich aus den Unteransprüchen.

Wichtige Merkmale der Erfindung bei dem Getriebe mit einem Gehäuse sind, dass es ein unteres Gehäuseteil aufweist, auf welches ein oberes Gehäuseteil aufgesetzt ist, wobei unteres Gehäuseteil und oberes Gehäuseteil sich entlang einer Berührfläche berühren , so dass die Berührfläche zwischen unterem und oberem Gehäuseteil in einer Ebene liegt, wobei am Gehäuse Kühlrippen angeordnet sind, welche derart gebogen ausgeführt sind, dass ein Teil eines am Gehäuse entlang strömenden, axial gerichteten Luftstroms, also einen parallel zur Drehachse der eintreibenden Welle strömenden Luftstrom, jeweils zwischen zwei in axialer Richtung nächstbenachbarten Kühlrippen in eine Querrichtung umgelenkt wird, wobei die oberhalb der Berührfläche angeordneten Kühlrippen den jeweiligen Teil des Luftstroms in Querrichtung, insbesondere in die vertikale Richtung, umlenken und die unterhalb der Berührfläche angeordneten Kühlrippen den jeweils zugeordneten Teil in eine zur Querrichtung entgegengesetzt gerichtete Richtung umlenken, wobei die axiale Richtung parallel zur Berührfläche, insbesondere Ebene ist. Das obere Gehäuseteil muss nicht in Gravitationsrichtung oben, also über dem unteren Gehäuseteil angeordnet sein, sondern das Getriebe kann in jeder beliebigen Ausrichtung aufgestellt werden. Daher ist unter dem oberen Gehäuseteil ein erstes Gehäuseteil zu verstehen und unter dem unteren Gehäuseteil ein zweites Gehäuseteil. Oberhalb bedeutet dann auf derjenigen Seite der Berührfläche, auf welcher das erste Gehäuseteil angeordnet ist, oder mit anderen Worten auf dem vom zweiten Gehäuseteil abgewandten Raumbereich. Unterhalb bedeutet somit in dem vom ersten Gehäuseteil abgewandten Raumbereich der Berührfläche

Von Vorteil ist dabei, dass durch die in axialer Richtung hintereinander angeordneten Kühlrippen mehrere Teile des Luftstroms aufgefangen und umgelenkt werden, so dass eine gleichmäßigere Entwärmung des Getriebes ermöglicht ist.

Erfindungsgemäß nimmt der Anfangsabstand der Kühlrippen in axialer Richtung monoton ab, insbesondere proportional zur axialen Position oder progressiver, wobei der Anfangsabstand der jeweiligen Kühlrippe jeweils der geringste Abstand zur Berührfläche ist, wobei die axiale Position der Abstand zur entgegengesetzt zur axialen Richtung angeordneten, axialen Endbereich des Getriebes ist. Von Vorteil ist dabei, dass die in Richtung des Luftstroms weiter entfernten Kühlrippen näher an der Berührfläche beginnen, also mit einem geringeren Anfangsabstand. Eine monotone Abnahme der Anfangsabstände bewirkt, dass der zwischen jeweils zwei nächstbenachbarten stets ein gleichbreiter Teil des Luftstroms ist und somit eine gleichmäßige Aufteilung des Luftstroms erreichbar ist.

Bei einer vorteilhaften Ausgestaltung ist der Anfangsabstand der Kühlrippen in axialer Richtung umgekehrt proportional zur axialen Position. Von Vorteil ist dabei, dass mit größerer Entfernung vom den Luftstrom antreibenden Lüfter der Anfangsabstand progressiv abnimmt und somit ein annähernd konstanter Volumenstrom zwischen jeweils zwei nächstbenachbarten Kühlrippen durchleitbar ist.

Erfindungsgemäß ist ein Lüfter am Getriebe angeordnet, insbesondere ein Lüfter drehfest mit der eintreibenden Welle verbunden ist, wobei der Lüfter den axial gerichteten Luftstrom entlang des Gehäuses bewirkt, insbesondere wobei der Quotient aus einer ersten Differenz und einer zweiten Differenz proportional ist zum Quotienten einer zweiten Geschwindigkeit zu einer ersten Geschwindigkeit, wobei die erste Differenz der Differenzbetrag der Anfangsabstände jeweils zweier, in axialer Richtung zueinander nächstbenachbarter Kühlrippen ist, wobei der Luftstrom beim Einströmen zwischen die Kühlrippen die erste Geschwindigkeit, also Strömungsgeschwindigkeit, aufweist, wobei die zweite Differenz der Differenzbetrag der Anfangsabstände jeweils zweier weiterer, in axialer Richtung zueinander nächstbenachbarter Kühlrippen ist, wobei der Luftstrom beim Einströmen zwischen dies weiterer Kühlrippen die zweite Geschwindigkeit, also Strömungsgeschwindigkeit, aufweist. Von Vorteil ist dabei, dass ein gleichmäßiges Verteilen des Luftstroms erreichbar ist. Denn zwischen je zwei zueinander nächstbenachbarte Kühlrippen wird der gleiche Teil geführt. Somit ist eine im Wesentliche gleichmäßige Entwärmung des Getriebes erreichbar.

Bei einer vorteilhaften Ausgestaltung gleicht das untere Gehäuseteil dem oberen Gehäuseteil. Von Vorteil ist dabei, dass mit wenig Teilen eine Vielfalt von Getrieben herstellbar sind.

Bei einer vorteilhaften Ausgestaltung sind eine erste Anzahl der Kühlrippen oberhalb der Berührfläche angeordnet und die restlichen Kühlrippen unterhalb der Berührfläche, insbesondere wobei die erste Anzahl der Anzahl der restlichen Kühlrippen gleicht. Von Vorteil ist dabei, dass das Getriebe symmetrisch entwärmt wird, also gleichmäßig.

Bei einer vorteilhaften Ausgestaltung sind die Kühlrippen jeweils zweistückig oder mehrstückig ausgeführt, wobei ein jeweiliges erstes Stück an einem der beiden Gehäuseteile ausgeformt ist und ein jeweiliges weiteres Stück an einem Lagerdeckel ausgeformt ist, insbesondere wobei zwischen dem jeweiligen ersten Stück und dem jeweiligen weiteren Stück ein Luftspalt angeordnet ist. Von Vorteil ist dabei, dass die Lager mit einem Lagerdeckel abdeckbar sind und trotzdem eine gleichmäßige Entwärmung ermöglicht ist.

Bei einer vorteilhaften Ausgestaltung ist der jeweils gebogene Verlauf der oberhalb der Berührfläche angeordneten Kühlrippen bezüglich der Berührfläche spiegelsymmetrisch zum gebogenen Verlauf der unterhalb der Berührfläche angeordneten Kühlrippen. Von Vorteil ist dabei, dass eine einfache Herstellung erreichbar ist.

Die Erfindung wird nun anhand von Abbildungen näher erläutert:
In der Figur 1 ist ein Getriebe dargestellt, dessen Gehäuse aus einem unteren Gehäuseteil 4 und einem darauf aufgesetzten, oberen Gehäuseteil 1 aufgebaut ist.

In der Figur 2 ist ein Getriebe mit einem Lüfter 5 gezeigt.

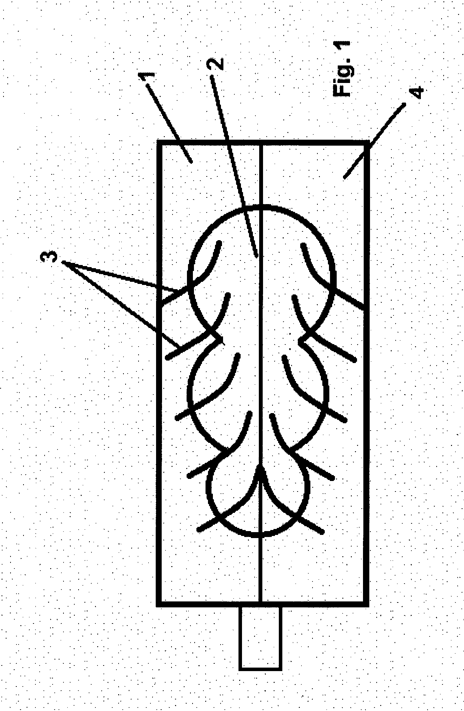

Wie in Figur 1 gezeigt, sind die beiden Gehäuseteile 1 und 4 gleichartig aufgebaut, also gleich ausgeformt.

Die beiden Gehäuseteile 1 und 4 weisen jeweils Lagersitze auf, in welchen Lager aufnehmbar sind zur Lagerung einer eintreibenden Welle, einer abtreibenden Welle und zweier Zwischenwellen, wobei mit den Zwischenwellen jeweils zwei Verzahnungsteile drehfest verbunden sind und mit der eintreibenden Welle sowie mit der abtreibenden Welle nur jeweils ein Verzahnungsteil.

Wie in Figur 1 gezeigt, ist die eintreibende Getriebestufe als Winkelgetriebestufe ausgeführt und treibt zwei Parallelwellengetriebestufen an, so dass die beiden Zwischenwellen und die abtreibende Welle samt ihrem Lager seitlich mittels Lagerdeckel 2 abgedeckt sind.

Im Innenraum des Getriebes ist Schmieröl eingefüllt, so dass die jeweils im Eingriff stehenden Verzahnungen mit Schmieröl geschmiert sind.

Zur Abfuhr der Wärme sind Kühlrippen 3 vorgesehen, die mehrteilig aufgebaut sind. Jede der Kühlrippen 3 ist zumindest zweiteilig aufgebaut. Ein erster Teil der jeweiligen Kühlrippe 3 ist auf dem Lagerdeckel 2 angeordnet und ein zweiter Teil auf dem jeweiligen Gehäuseteil 1 oder 4.

Das obere Gehäuseteil 1 ist entlang einer Berührebene mit dem unteren Gehäuseteil 4 verbunden.

Jede Kühlrippe verläuft von der Berührebene ausgehend gebogen, so dass ein Luftstrom der entlang der Berührebene in axialer Richtung, also parallel zur Richtung der Drehachse der eintreibenden Welle, am Gehäuse des Getriebes entlang einströmt, nach oben beziehungsweise nach unten abgelenkt wird.

Der gebogene Verlauf der jeweiligen Kühlrippe 3 beginnt bei einem Anfangsabstand zur Berührfläche und endet bei einem größeren Endabstand. Entlang der Kühlrippe 3 wächst der Abstand zur Berührfläche monoton. Vorzugsweise ist der Verlauf der Kühlrippe 3 jeweils derart, dass auch die Steigung monoton zunimmt mit dem Abstand zur Berührfläche.

Die Wandstärke der jeweiligen Kühlrippe 3 ist vorzugsweise im Wesentlichen konstant. Zwischen dem auf dem Lagerdeckel 2 angeordneten und/oder ausgeformten Bereich der jeweiligen Kühlrippe 3 und dem auf dem oberen beziehungsweise unteren Gehäuseteil (1, 4) angeordneten und/oder ausgeformten Bereich der jeweiligen Kühlrippe 3 ist ein Luftspalt vorhanden. Vorzugsweise ist dieser Luftspalt möglichst schmal ausgeführt.

Die Werte der jeweiligen Anfangsabstände der Kühlrippen 3 nehmen in axialer Richtung monoton ab, wobei der Anfangsabstand der letzten Kühlrippe 3 sogar verschwindet, insbesondere so, dass die letzte Kühlrippe 3 des oberen Gehäuseteils 1 und die letzte Kühlrippe 3 des unteren Gehäuseteils 4 sich sehr nahekommen oder berühren.

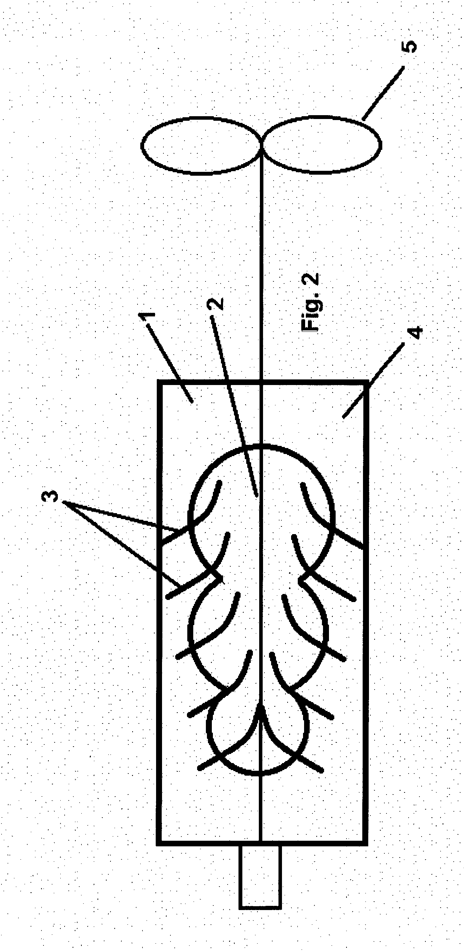

Wie in Figur 2 gezeigt, ist auch ein Lüfter vorsehbar, dessen Luftstrom in axialer Richtung an den äußeren Seiten des Getriebes vorbeiströmt. Durch die gebogenen Kühlrippen 3 wird ein jeweiliger Teil des geförderten Luftstroms in Querrichtung abgelenkt, wobei die Kühlrippen 3 des oberen Gehäuseteils 1 den jeweiligen Teil nach oben umlenken und die Kühlrippen 3 des unteren Gehäuseteils 1 den jeweiligen Teil nach unten umlenken.

In der in Figur 1 und Figur 2 gezeigten Ausführung nimmt der Anfangsabstand der Kühlrippen 3 in axialer Richtung proportional zur axialen Entfernung von der Stirnseite des Getriebes ab. Die Stirnseite des Getriebes ist bei dem Ausführungsbeispiel nach Figur 2 die dem Lüfter zugewandte Seite des Getriebes. Durch die proportionale Abhängigkeit vom axialen Abstand wird ein stets gleich breiter Teil des Luftstroms zwischen zwei jeweils nächstbenachbarten Kühlrippen 3 des jeweiligen Gehäuseteils (1, 4) umgelenkt.

In weiteren Ausführungsbeispielen weist der Anfangsabstand der Kühlrippen 3 eine Abhängigkeit von der axialen Richtung gemäß einer Funktion auf, die eine höhere Ordnung aufweist, insbesondere gemäß einer quadratischen Funktion. Somit weist der zwischen zwei jeweils nächstbenachbarten Kühlrippen 3 des jeweiligen Gehäuseteils 1 oder 4 umgelenkte Teil des Luftstroms eine in Querrichtung zur axialen Richtung gesehen, mit dem axialen Abstand zunehmende Breite auf. Da aber die Strömungsgeschwindigkeit des jeweiligen umgelenkten Teils mit zunehmendem axialen Abstand abnimmt, ist der umgelenkte Luftvolumenstrom, als jeweils umgelenktes Volumen pro Zeit, möglichst konstant.

Auf diese Weise ist eine möglichst gleichmäßige Verteilung der Kühlleistung an derjenigen Seitenfläche des Getriebes erreichbar, entlang derer der Luftstrom vorbeiströmt.

Der Lüfter 5 ist drehfest auf der eintreibenden Welle angeordnet und fördert somit dann den Luftstrom entgegen der axialen Richtung. Die Anfangsabstände der Kühlrippen nehmen analog zu der oben beschriebenen Ausführung somit entgegen der axialen Richtung mit zunehmendem axialen Abstand zur eintreibenden Welle, insbesondere zum Lager der eintreibenden Welle, proportional ab oder derart progressiv, dass der jeweils zwischen zwei Kühlrippen 3 umgelenkte Teil des insbesondere vom Lüfter geförderten Luftstroms gleichen Volumenstrom bewirkt.

Damit der Volumenstrom gleich in zwei verschiedenen Teilen gleich ist, verhalten sich die Differenzen der Anfangsabstände benachbarter Kühlrippen 3 vorzugsweise umgekehrt proportional wie die Geschwindigkeiten des Luftstroms, welche der Luftstrom jeweils beim Einströmen in die Zwischenbereiche zwischen den jeweils zwei benachbarten Kühlrippen aufweist. Es gilt also:

$$Da1 / Da2 = v2 / v1$$

wobei Da1 der Differenzbetrag der beiden Anfangsabstände zweier in Strömungsrichtung nächstbenachbarten Kühlrippen 3 ist,

wobei Da2 der Differenzbetrag der beiden Anfangsabstände zweier in Strömungsrichtung nächstbenachbarten Kühlrippen 3 ist, die vorzugsweise in Strömungsrichtung von den zu Da1 zugeordneten Kühlrippen 3 beabstandet sind,

wobei v1 die Strömungsgeschwindigkeit des Luftstroms im Einströmbereich zwischen den beiden Da1 zugeordneten Kühlrippen 3 ist,

und wobei v2 die Strömungsgeschwindigkeit des Luftstroms im Einströmbereich zwischen den beiden Da2 zugeordneten Kühlrippen 3 ist.

Der gebogene Verlauf der Kühlrippen 3 weist eine in Strömungsrichtung zunehmende Steigung auf, so dass die anfänglich nahezu parallel zur Strömungsrichtung orientierte Steigung sich zunehmend, also immer mehr, in Querrichtung neigt.

In weiteren erfindungsgemäßen Ausführungsbeispielen sind zusätzlich weitere Kühlrippen vorgesehen. Vorzugsweise sind diese weiteren Kühlrippen außerhalb des Bereichs der Kühlrippen 3 angeordnet, also nicht zwischen jeweils zwei der Kühlrippen 3.

In weiteren erfindungsgemäßen Ausführungsbeispielen ist das Getriebe in einer anderen Ausrichtung ausgerichtet. Das obere Gehäuseteil muss nicht in Gravitationsrichtung oben, also über dem unteren Gehäuseteil angeordnet sein, sondern das Getriebe kann in jeder beliebigen Ausrichtung aufgestellt werden. Daher ist unter dem oberen Gehäuseteil ein erstes Gehäuseteil zu verstehen und unter dem unteren Gehäuseteil ein zweites Gehäuseteil. Oberhalb bedeutet dann auf derjenigen Seite der Berührfläche, auf welcher das erste Gehäuseteil angeordnet ist, oder mit anderen Worten auf dem vom zweiten Gehäuseteil abgewandten Raumbereich. Unterhalb bedeutet somit in dem vom ersten Gehäuseteil abgewandten Raumbereich der Berührfläche.

## Bezugszeichenliste

1 oberes Gehäuseteil
2 Lagerdeckel
3 Kühlrippe
4 unteres Gehäuseteil
5 Lüfter

## Patentansprüche

1. Getriebe mit einem Gehäuse und einem einen Luftstrom bewirkenden Lüfter (5),

   wobei das Gehäuse ein unteres Gehäuseteil (4) und ein oberes Gehäuseteil (1) aufweist,
   wobei das obere Gehäuseteil (1) auf das untere Gehäuseteil (4) aufgesetzt ist,
   wobei das Getriebe eine eintreibende Welle aufweist,
   wobei das untere Gehäuseteil (4) und das obere Gehäuseteil (1) sich entlang einer Berührfläche berühren,
   so, dass die Berührfläche zwischen dem unteren und dem oberen Gehäuseteil (1, 4) in einer Ebene liegt,
   **dadurch gekennzeichnet, dass**
   der Lüfter (5) derart am Getriebe angeordnet und drehfest mit der eintreibenden Welle verbunden ist, dass der vom Lüfter (5) bewirkte Luftstrom axial gerichtet ist,
   wobei
   am Gehäuse in axialer Richtung zueinander benachbarte Kühlrippen (3) angeordnet sind, welche derart gebogen ausgeführt sind, dass ein Teil des am Gehäuse entlang strömenden, axial, also parallel zur Drehachse der eintreibenden Welle des Getriebes, gerichteten Luftstroms jeweils zwischen zwei in axialer Richtung nächstbenachbarten Kühlrippen (3) in eine jeweilige Querrichtung umgelenkt wird,
   wobei eine erste Anzahl der Kühlrippen (3) oberhalb der Berührfläche angeordnet ist,
   eine weitere Anzahl der Kühlrippen (3) unterhalb der Berührfläche angeordnet ist,
   wobei die oberhalb der Berührfläche angeordneten Kühlrippen (3) den jeweiligen Teil des Luftstroms in Querrichtung umlenken und die unterhalb der Berührfläche angeordneten Kühlrippen (3) den jeweils zugeordneten Teil in eine zur Querrichtung entgegengesetzt gerichtete Richtung umlenken,
wobei der Anfangsabstand der Kühlrippen (3) in axialer Richtung monoton abnimmt,
wobei der Anfangsabstand der jeweiligen Kühlrippe (3) jeweils der geringste Abstand der Kühlrippe (3) zur Berührfläche ist,
wobei die axiale Richtung parallel zur Berührfläche ist,
wobei die Kühlrippen (3) jeweils zweistückig oder mehrstückig ausgeführt sind,
wobei ein jeweiliges erstes Stück der Kühlrippen (3) an einem der beiden Gehäuseteile (1, 4) ausgeformt ist und ein jeweiliges weiteres Stück der Kühlrippen (3) an einem Lagerdeckel (2) des Getriebes ausgeformt ist.

2. Getriebe nach Anspruch 1,
**dadurch gekennzeichnet, dass**

der Anfangsabstand der Kühlrippen (3) in axialer Richtung proportional zur axialen Position oder progressiver abnimmt,
wobei die axiale Position der Abstand zum entgegengesetzt zur axialen Richtung angeordneten, axialen Endbereich des Getriebes ist.

3. Getriebe nach Anspruch 2,
**dadurch gekennzeichnet, dass**
der Anfangsabstand der Kühlrippen (3) in axialer Richtung umgekehrt proportional zur axialen Position ist.

4. Getriebe nach einem der vorangegangenen Ansprüche,
**dadurch gekennzeichnet, dass**

die Kühlrippen (3) derart am Getriebe angeordnet und geformt sind, dass
der Quotient aus einer ersten Differenz und einer zweiten Differenz proportional ist zum Quotienten aus einer zweiten Geschwindigkeit zu einer ersten Geschwindigkeit,
wobei die erste Differenz der Differenzbetrag der Anfangsabstände jeweils zweier, in axialer Richtung zueinander nächstbenachbarter Kühlrippen (3) ist, wobei der Luftstrom beim Einströmen zwischen die Kühlrippen (3) die erste Geschwindigkeit, also Strömungsgeschwindigkeit, aufweist,
wobei die zweite Differenz der Differenzbetrag der Anfangsabstände jeweils zweier weiterer, in axialer Richtung zueinander nächstbenachbarter Kühlrippen (3) ist, wobei der Luftstrom beim Einströmen zwischen die weiteren Kühlrippen (3) die zweite Geschwindigkeit, also Strömungsgeschwindigkeit, aufweist.

5. Getriebe nach einem der vorangegangenen Ansprüche,
**dadurch gekennzeichnet, dass**
das untere Gehäuseteil (4) dem oberen Gehäuseteil (1) gleicht.

6. Getriebe nach einem der vorangegangenen Ansprüche,
**dadurch gekennzeichnet, dass**
eine erste Anzahl der Kühlrippen (3) oberhalb der Berührfläche angeordnet sind und die restlichen Kühlrippen (3) unterhalb der Berührfläche.

7. Getriebe nach einem der vorangegangenen Ansprüche,
**dadurch gekennzeichnet, dass**
zwischen dem jeweiligen ersten Stück und dem jeweiligen weiteren Stück ein Luftspalt angeordnet ist.

8. Getriebe nach einem der vorangegangenen Ansprüche,
**dadurch gekennzeichnet, dass**
ein jeweils gebogener Verlauf der oberhalb der Berührfläche angeordneten Kühlrippen (3) bezüglich der Berührfläche spiegelsymmetrisch zu einem gebogenen Verlauf der unterhalb der Berührfläche angeordneten Kühlrippen (3) ist.

9. Getriebe nach einem der vorangegangenen Ansprüche,
**dadurch gekennzeichnet, dass**
die am Gehäuse angeordneten Kühlrippen (3) derart angeordnet und gebogen ausgeführt sind, dass zwischen je zwei in axialer Richtung nächstbenachbarten Kühlrippen (3) derselbe Luftvolumenstrom geführt wird, wobei bei axial größerer Position, also mit zunehmendem Abstand zum axialen Endbereich des Getriebes, der Abstand in axialer Richtung zwischen den beiden in axialer Richtung nächstbenachbarten Kühlrippen (3) zunimmt.

**Claims**

1. A gearbox having a housing and a fan (5) which brings about an air flow,

wherein the housing has a lower housing part (4) and an upper housing part (1),
wherein the upper housing part (1) is placed upon the lower housing part (4),
wherein the gearbox has an input shaft,
wherein the lower housing part (4) and the upper housing part (1) contact along a contact surface, so that the contact surface lies between the lower and the upper housing part (1, 4), in one plane,
**characterised in that**
the fan (5) is arranged at the gearbox and connected to the input shaft in a rotationally-fixed manner, such that the air flow brought about by the fan (5) is axially directed,

wherein cooling ribs (3) adjacent to one another in an axial direction are arranged at the housing, which ribs are curved in such a manner that a portion of the air flow flowing along the housing and directed axially, therefore parallel to the rotational axis of the input shaft of the gearbox, is in each case deflected in a respective transverse direction between two cooling ribs (3) next-adjacent in an axial direction,

wherein a first number of the cooling ribs (3) are arranged above the contact surface,

a further number of the cooling ribs (3) are arranged below the contact surface,

wherein the cooling ribs (3) arranged above the contact surface deflect the respective portion of the air flow in a transverse direction and the cooling ribs (3) arranged below the contact surface deflect the portion associated in each case in a direction directed counter to the transverse direction,

wherein the initial spacing of the cooling ribs (3) in an axial direction decreases monotonically, wherein the initial spacing of the respective cooling rib (3) is in each case the smallest spacing of the cooling rib (3) from the contact surface, wherein the axial direction is parallel to the contact surface,

wherein the cooling ribs (3) are two-part or multipart in each case,

wherein a respective first part of the cooling ribs (3) is formed on one of the two housing parts (1, 4) and a respective further part of the cooling ribs (3) is formed on a bearing cover (2) of the gearbox.

2. A gearbox according to claim 1,
   **characterised in that**

   the initial spacing of the cooling ribs (3) in an axial direction decreases proportionally to the axial position or more progressively,
   wherein the axial position is the spacing from the axial end region, arranged counter to the axial direction, of the gearbox.

3. A gearbox according to claim 2,
   **characterised in that**
   the initial spacing of the cooling ribs (3) in an axial direction is inversely proportional to the axial position.

4. A gearbox according to any one of the preceding claims,
   **characterised in that**

the cooling ribs (3) are arranged and formed on the gearbox in such a manner that the quotient of a first difference and a second difference is proportional to the quotient of a second speed to a first speed,

wherein the first difference is the difference in amount of the initial spacings of in each case two cooling ribs (3) next-adjacent to one another in an axial direction, wherein the air flow has the first speed, therefore flow velocity, upon flowing in between the cooling ribs (3),

wherein the second difference is the difference in amount of the initial spacings of in each case two further cooling ribs (3) next-adjacent to one another in an axial direction, wherein the air flow has the second speed, therefore flow velocity, upon flowing in between the further cooling ribs (3).

5. A gearbox according to any one of the preceding claims,
   **characterised in that**
   the lower housing part (4) is like the upper housing part (1).

6. A gearbox according to any one of the preceding claims,
   **characterised in that**
   a first number of the cooling ribs (3) are arranged above the contact surface and the remaining cooling ribs (3) are arranged below the contact surface.

7. A gearbox according to any one of the preceding claims,
   **characterised in that**
   an air gap is arranged between the respective first part and the respective further part.

8. A gearbox according to any one of the preceding claims,
   **characterised in that**
   a course, curved in each case, of the cooling ribs (3) arranged above the contact surface is mirror-symmetrical with regard to the contact surface to a curved course of the cooling ribs (3) arranged below the contact surface.

9. A gearbox according to any one of the preceding claims,

   **characterised in that** the cooling ribs (3) arranged at the housing are arranged and curved in such a manner that the same air volume flow is guided between each two cooling ribs (3) next-adjacent in an axial direction, wherein in the case of an axially greater position,
   therefore as the spacing from the axial end region of the gearbox increases, the spacing in an axial direction between the two cooling ribs (3) next-adjacent in an axial direction increases.

## Revendications

1. Transmission munie d'un carter et d'un ventilateur (5) engendrant un courant d'air,

ledit carter comprenant une partie inférieure (4) et une partie supérieure (1),

la partie supérieure (1) du carter étant mise en place sur la partie inférieure (4) dudit carter,

sachant que la transmission comporte un arbre d'entrée,

ladite partie inférieure (4) du carter et ladite partie supérieure (1) du carter étant en contact mutuel le long d'une surface de contact

de façon telle que ladite surface de contact, entre les parties inférieure et supérieure (4, 1) du carter, soit située dans un plan,

**caractérisée par le fait que**

le ventilateur (5) est disposé sur la transmission, et est verrouillé en rotation avec l'arbre d'entrée, de telle manière que le courant d'air engendré par ledit ventilateur (5) soit dirigé axialement,

sachant que des nervures de refroidissement (3), implantées sur le carter et voisines les unes des autres dans la direction axiale, présentent une réalisation courbe telle qu'une part du courant d'air s'écoulant le long du carter et dirigé axialement, c'est-à-dire parallèlement à l'axe de rotation de l'arbre d'entrée de la transmission, soit déviée à chaque fois dans une direction transversale respective, entre deux nervures de refroidissement (3) les plus rapprochées l'une de l'autre dans la direction axiale,

un premier nombre des nervures de refroidissement (3) étant disposé au-dessus de la surface de contact,

un nombre supplémentaire desdites nervures de refroidissement (3) étant disposé au-dessous de ladite surface de contact,

sachant que les nervures de refroidissement (3) placées au-dessus de la surface de contact dévient la part considérée du courant d'air dans la direction transversale, et que les nervures de refroidissement (3) placées au-dessous de ladite surface de contact dévient la part respectivement associée dans une direction pointant en sens inverse de ladite direction transversale,

l'espacement initial desdites nervures de refroidissement (3) décroissant alors de manière monotone dans la direction axiale,

sachant que l'espacement initial de la nervure de refroidissement (3) considérée constitue, à chaque fois, l'espacement le plus faible de ladite nervure de refroidissement (3) par rapport à la surface de contact,

la direction axiale étant parallèle à ladite surface de contact,

sachant que les nervures de refroidissement (3) sont réalisées, à chaque fois, en deux pièces ou en plusieurs pièces,

une première pièce respective des nervures de refroidissement (3) étant alors façonnée sur l'une des deux parties (1, 4) du carter, et une autre pièce considérée desdites nervures de refroidissement (3) étant façonnée sur un couvercle (2) de palier de ladite transmission.

2. Transmission selon la revendication 1, **caractérisée par le fait que**

l'espacement initial des nervures de refroidissement (3) décroît, dans la direction axiale, proportionnellement à l'emplacement axial ou de manière davantage progressive,

lequel emplacement axial est l'espacement par rapport à la région extrême axiale de ladite transmission qui est située en sens inverse vis-à-vis de ladite direction axiale.

3. Transmission selon la revendication 2, **caractérisée par le fait que**
l'espacement initial des nervures de refroidissement (3) est inversement proportionnel à l'emplacement axial dans la direction axiale.

4. Transmission selon l'une des revendications précédentes, **caractérisée par le fait que**

les nervures de refroidissement (3) sont agencées et façonnées, sur ladite transmission, de façon telle que le quotient d'une première différence et d'une seconde différence soit proportionnel au quotient d'une seconde vitesse, vis-à-vis d'une première vitesse,

ladite première différence étant la valeur différentielle des espacements initiaux de deux nervures de refroidissement (3) considérées, les plus rapprochées l'une de l'autre dans la direction axiale, sachant que, lors de l'afflux entre lesdites nervures de refroidissement (3), le courant d'air présente la première vitesse, à savoir une vitesse d'écoulement,

ladite seconde différence étant la valeur différentielle des espacements initiaux de deux nervures de refroidissement (3) supplémentaires considérées, les plus rapprochées l'une de l'autre dans la direction axiale, sachant que, lors de l'afflux entre lesdites nervures de refroidissement (3) supplémentaires, ledit courant d'air présente la seconde vitesse, à savoir une vitesse d'écoulement.

**5.** Transmission selon l'une des revendications précédentes,
**caractérisée par le fait que**
la partie inférieure (4) du carter est identique à la partie supérieure (1) dudit carter.

**6.** Transmission selon l'une des revendications précédentes,
**caractérisée par le fait**
**qu'**un premier nombre des nervures de refroidissement (3) est disposé au-dessus de la surface de contact, et les nervures de refroidissement (3) restantes sont placées au-dessous de ladite surface de contact.

**7.** Transmission selon l'une des revendications précédentes,
**caractérisée par le fait**
**qu'**un entrefer se trouve entre la première pièce considérée et la pièce supplémentaire respective.

**8.** Transmission selon l'une des revendications précédentes,
**caractérisée par le fait**
**qu'**un profil courbe respectif des nervures de refroidissement (3) placées au-dessus de la surface de contact offre, vis-à-vis de la surface de contact, une symétrie spéculaire par rapport à un profil courbe des nervures de refroidissement (3) placées au-dessous de ladite surface de contact.

**9.** Transmission selon l'une des revendications précédentes,
**caractérisée par le fait que**
les nervures de refroidissement (3), implantées sur le carter, présentent un agencement et une réalisation courbe tels que le même débit volumique d'air soit guidé entre deux nervures de refroidissement (3) respectivement les plus rapprochées l'une de l'autre dans la direction axiale, sachant que l'espacement, séparant axialement lesdites deux nervures de refroidissement (3) les plus rapprochées l'une de l'autre dans la direction axiale, croît lorsque l'emplacement est axialement plus accentué, c'est-à-dire au fur et à mesure de l'accroissement dudit espacement par rapport à la région extrême axiale de ladite transmission.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2011069457 A
- GB 493698 A

- US 5191813 A